# EUROPÄISCHE PATENTSCHRIFT

(11) **EP 0 406 605 B1**
(45) Veröffentlichungstag und Bekanntmachung des Hinweises auf die Patenterteilung: **21.04.1993**
(21) Anmeldenummer: 90111395.1
(22) Anmeldetag: 16.06.1990
(51) Int. Cl.: C09C 3/04, C01G 23/08

(54) **Verfahren zur Kalzinierung von Filterkuchen in direkt beheizten Drehrohröfen**
Process for the calcination of filter cakes in directly heated rotary furnaces
Procédé pour la calcination de pâtes de filtration dans des fours rotatifs chauffés directement

(30) Priorität: 29.06.1989 DE 3921262
(43) Veröffentlichungstag der Anmeldung: 09.01.1991
(73) Patentinhaber: BAYER AG, 51368 Leverkusen (DE)
(72) Erfinder: Holle, Bernd-Michael, Dr., D-4150 Krefeld (DE); Beumer, Peter, Dipl.-Ing., D-4150 Krefeld (DE); Braun, Rolf Michael, Dr., D-4150 Krefeld 1 (DE); Rieck, Hilmar, Dr., D-4150 Krefeld 1 (DE); Kischkewitz, Jürgen, Dr., D-4030 Ratingen 6 (DE); Wiederhöft, Gerhard, D-4150 Krefeld 1 (DE)

(56) Entgegenhaltungen:
- DE-A- 2 423 983
- GB-A- 1 516 326
- GB-A- 2 213 497

## Beschreibung

Die Erfindung betrifft ein Verfahren zur Kalzinierung von Filterkuchen in direkt beheizten Drehrohröfen.

Direkt beheizte Drehrohröfen werden in der thermischen Verfahrenstechnik für anorganische Stoffe eingesetzt, wobei in den Öfen durchaus unterschiedliche physikalische oder chemische Verfahrensschritte wie beispielsweise Trocknung, Kristallisation oder Kalzinierung durchgeführt werden. Dabei kommt das Aufgabegut im Ofen in direkten Kontakt mit den heißen Rauchgasen des Brenners. Die heißen Rauchgase können im Gleich- oder Gegenstrom zum Aufgabegut geführt werden. Das aus dem Ofen ausgetragene kalzinierte Material wird im allgemeinen als Ofenklinker bezeichnet Derartige direkt beheizte Drehrohröfen werden unter anderem bei der Herstellung anorganischer Pigmente eingesetzt. So wird beispielsweise bei der Herstellung von Titandioxid-Pigmenten nach dem Sulfatverfahren folgendermaßen vorgegangen:

Nach Aufschluß des Rohstoffes mit Schwefelsäure wird die erhaltene Aufschlußlösung in der Hitze unter Zugabe von Wasser und geeigneten Hydrolysekeimen hydrolysiert. Das erhaltene Titandioxid-Hydrat wird in mehreren aufeinanderfolgenden Verfahrensschritten filtriert, gewaschen, einer reduzierenden Behandlung im sauren Medium unterworfen, nochmals filtriert und gewaschen, mit verschiedenen Chemikalien versetzt, welche bei der nachfolgenden Glühung (Kalzinierung) Teilchengröße, Teilchengrößenverteilung und Rutilisierung steuern, und schließlich nochmals filtriert. Der erhaltene Filterkuchen wird in einen direkt beheizten Drehrohrofen eingespeist und zu einem Ofenklinker kalziniert. An die Kalzinierung schließen sich dann noch weitere Verfahrensschritte wie Mahlung und gegebenenfalls chemische Nachbehandlungen sowie Mikronisierung an.

Da in diesen direkt beheizten Drehrohrofen bei Rauchgastemperaturen von teilweise über 1200°C gearbeitet wird und Windgeschwindigkeiten von zum Teil über 15 m/sec erreicht werden, können auf derartige Öfen nur agglomerierte Feststoffe (z.B. Pellets) oder Filterkuchen mit einem gewissen Feuchtegehalt aufgegeben werden.

Die Filterkuchen sollten einen möglichst hohen Feststoffgehalt haben, damit bei der Kalzinierung möglichst wenig Energie verbraucht wird und ein hoher Durchsatz im Drehrohrofen erreicht wird.

Andererseits darf der Feststoffgehalt des Filterkuchens nicht zu hoch sein, da ansonsten im direkt beheizten Drehrohrofen der Feststoffaustrag mit den Ofengasen zu hoch ist. Außerdem erfordert eine derartige Erhöhung des Feststoffgehaltes des Filterkuchens über einen gewissen Feststoffgehalt der abhängig von der Art des Filterkuchens, ist unverhältnismäßig hohe Aufwendungen an Energie und sonstigen Kosten.

Für die oben beschriebene Filtration werden derzeit unterschiedliche Preßfilter (z.B. Membranfilterpressen, Dreh- oder Bandfilter mit Preßwalzen oder -bändern) verwendet, mit deren Hilfe der Filterkuchen unter Anwendung von Druck möglichst hoch entwässert wird (siehe GB 1 516 326 und DE-A-2 423 983).

Mit derartigen Filtern gelingt es beispielsweise, Feststoffgehalte in Titandioxid-Hydrat-Filterkuchen z.B. von 44-52 Gew.-% zu erhalten. Deutlich höhere Feststoffgehalte sind für das Titandioxid-Hydrat auch bei Anwendung sehr hoher Drucke nicht zu erreichen.

Bei anderen anorganischen Pigmenten werden in Abhängigkeit von der Teilchengröße, Teilchenform und der chemischen Zusammensetzung andere Feststoffgehalte im Filterkuchen erhalten (z.B.: Eisenoxid-Gelb (FeOOH) ca. 30 - 40 Gew.-% und Eisenoxid-Schwarz (Fe₃O₄) ca. 60 - 70 Gew.-%).

Aufgabe war es daher, ein Verfahren zur Verfügung zu stellen, mit dem man die Kalzinierung von Filterkuchen, die in direkt beheizte Drehrohröfen eingespeist werden, mit weniger Energieaufwand und/oder höherer Kapazität durchführen kann, ohne daß der Staub-Austrag mit den Ofen-Abgasen erhöht wird.

Gegenstand der Erfindung ist ein Verfahren zur Kalzinierung von Filterkuchen in einem direkt beheizten Drehrohrofen, wobei vor Einspeisung in den direkt beheizten Drehrohrofen eine Teilmenge des Filterkuchens vorgetrocknet und anschließend mit der Restmenge des Filterkuchens wieder vereinigt wird.

Insbesondere können bei diesem Verfahren anorganische Pigmente oder deren Vorprodukte als Filterkuchen eingesetzt werden, wie z.B. Titandioxid-Hydrat, das normalerweise einen Feststoffgehalt von 37 bis 52 Gew.-% in Abhängigkeit von der verwendeten Filtriervorrichtung und berechnet als TiO₂ aufweist.

In einer speziellen Ausführungsform des Verfahrens wird die Teilmenge des Filterkuchens in einem Pastentrockner mit gerührtem Fließbett vorgetrocknet.

Vorzugsweise werden 5 bis 50 Gew.-% des Filterkuchens als Teilmenge vorgetrocknet.

Die vorgetrocknete Teilmenge und die Restmenge des Filterkuchens werden vorteilhaft in einem Verhältnis gemischt, so daß eine krümelige, nicht staubende, homogene Masse erhalten wird.

Diese krümelige, nicht staubende, homogene Masse, die im direkt beheizten Drehrohrofen kalziniert wird, hat vorzugsweise einen Feststoffgehalt von 30 bis 85 Gew.-%.

Die vorgetrocknete Teilmenge wird mit der Restmenge des Filterkuchens vor der Einspeisung in den direkt beheizten Drehrohrofen bevorzugt in einem separaten Kneter oder direkt in der Ofenaufgabeschnecke vermischt.

Anorganische Festkörper, die nach einer der erfindungsgemäßen Verfahrensvarianten hergestellt werden, werden üblicherweise nach der Kalzinierung noch vermahlen und gegebenenfalls nachbehandelt sowie mikronisiert.

Bevorzugte anorganische Festkörner sind Oxide insbesondere Titandioxid, Chrom-III-oxid, Zinkoxid und Eisenoxide.

Das nach der Kalzinierung anfallende Produkt wird üblicherweise als "Ofenklinker" bezeichnet. Dieser Ofenklinker wird anschließend gemahlen, gegenenfalls unter Zugabe von Mahlhilfsmitteln. An diese Mahlung kann sich noch eine sogenannte Nachbehandlung anschließen, die folgende Schritte umfaßt: Anmaischen, gegebenenfalls unter Zugabe von Dispergierhilfsmitteln, anschließend Zugabe der organischen oder anorganischen Nachbehandlungsmittel zur Maische (wie z.B.: Phoshor-, Aluminium-, Silizium- und Zirkoniumverbindungen), Filtration, Waschung, Trocknung und Mikronisierung zu nachbehandelten Pigmenten.

Mit dem erfindungsgemäßen Verfahren ist es möglich, den Durchsatz im direkt beheizten Drehrohrofen zu erhöhen und/oder den Energieverbrauch zu erniedrigen, indem der Feststoffgehalt der Filterkuchen, die in den Ofen eingespeist werden, auf eine energiegünstige Art und Weise außerhalb des Drehrohrofens erhöht wird.

Nach dem erfindungsgemäßen Verfahren wird die Teilmenge in entsprechenden Aggregaten energiegünstig normalerweise bei Produkt-Temperaturen zwischen 80 und 150°C getrocknet. Die nach Trocknung in Form eines Pulvers anfallende Teilmenge wird anschließend mit der Restmenge des Filterkuchens derart gemischt, daß die resultierende Masse homogen und krümelig ist. Im Falle von Titandioxid-Hydrat kann man den Feststoffgehalt des Filterkuchens dadurch bis auf ca. 65 % anheben. Bei dieser Verfahrensweise besteht auch nicht die Gefahr, daß der Filterkuchen vorzeitig aus dem direkt beheizten Drehrohrofen aufgrund der hohen Ofengasgeschwindigkeiten ausgetragen wird. Das Mischen aus vorgetrockneter Teilmenge und Restmenge kann entweder in konventionellen Ofeneintragsvorrichtungen (Schnecken) oder in einem vorgeschalteten Mischer bzw. Kneter (z.B. Paddelschnecke) vorgenommen werden. Im Falle der Herstellung von Titandioxid-Pigmenten wird sogar überraschenderweise, wenn nach dem oben beschriebenen, erfindungsgemäßen Verfahren gearbeitet wird, ein Produkt höherer Qualität (besseres rel. Aufhellvermögen, höhere Helligkeit) erzeugt.

Im folgenden wird die Erfindung anhand von Beispielen näher erläutert.

### Beispiel 1

Eine nach dem bekannten Sulfatverfahren zur Herstellung von Titandioxid-Pigmenten erhaltene wäßrige Aufschlämmung von Titandioxid-Hydrat hat einen Feststoffgehalt von 28 Gew.-% (berechnet als TiO₂). Diese Suspension wird über ein Drehfilter mit zusätzlichem Preßband filtriert. Der erhaltene Filterkuchen weist einen Feststoffgehalt von 44 Gew.-% (berechnet als TiO₂) auf. 4,9 t des Filterkuchens werden pro Stunde über einen Pastenbunker in einen Pastentrockner eingespeist. Der Pastentrockner wird mit Rauchgas über eine Brennkammer beheizt. Aus dem Schlauchfilter des Pastentrockners werden pro Stunde 2,6 t Trockenmaterial mit einem Feststoffgehalt von 83 Gew.-% (berechnet als TiO₂) ausgeschleust und über eine Förderschnecke dem Aufgabeschacht eines direkt beheizten Drehrohrofens zugeführt. Der Drehrohrofen wird über eine Brennkammer direkt mit Erdgas im Gegenstrom zur Produkt-Aufgabe beheizt. In den Aufgabeschacht des Drehrohrofens werden gleichzeitig mit dem Trockenmaterial 10,2 t/h Filterkuchen mit einem Feststoffgehalt von 44 Gew.% (berechnet als TiO₂) eingespeist. Der Aufgabeschacht für den Drehrohrofen mündet in die Ofenaufgabeschnecke. In der Ofenaufgabeschnecke werden das Trockenmaterial aus dem Pastentrockner und der Filterkuchen derart vermischt, daß eine homogene krümelige Masse (12,8 t/h) mit einem Feststoffgehalt von 52 Gew.-% (berechnet als TiO₂) in den Ofen eingetragen wird. Das aus dem Drehrohrofen abziehende Rauchgas (46.200 Nm³/h) weist einen Staubgehalt von 5,6 g/Nm³ auf, welcher nicht größer als bei normaler Fahrweise mit einem Filterkuchen mit einem Feststoffgehalt von 44 Gew.-% (berechnet als TiO₂) ist. Wird das vorgetrocknete Material ohne Zumischung des restlichen Filterkuchens oder werden das vorgetrocknete Material und der restliche Filterkuchen ohne vorherige Mischung in den Drehrohrofen eingespeist. so wird ein Staubaustrag von 46 g/Nm³ und mehr aus dem Ofen beobachtet. Beim Eintrag von 12,8 t/h der oben genannten Mischung aus Filterkuchen und Trockenmaterial werden aus dem Drehrohrofen 6,4 t/h an Pigment-Ofenklinker ausgeschleust, welcher gegenüber einem Ofenklinker, der nach bekannten Kalzinierverfahren hergestellt wurde, verbesserte Eigenschaften aufweist (relatives Aufhellvermögen: 635 anstatt 600 und Helligkeit: 93,1 statt 92,9). Gegenüber der normalen Fahrweise mit einem Filterkuchen von 44 Gew.-% bezogen auf TiO₂ konnte die Kalzinierungskapazität des Drehrohrofens um 23 %. gesteigert werden.

### Beispiel 2

Eine nach dem bekannten Anilinverfahren erhaltene wäßrige Aufschlämmung von Eisenoxid-Schwarz (Fe₃O₄) hat einen Feststoffgehalt von 30 Gew.-% (berechnet als Fe₃O₄) Diese Suspension wird über ein Drehfilter filtriert Der erhaltene Filterkuchen weist einen Feststoffgehalt von 65 Gew.-% (berechnet als Fe₃O₄) auf. 1,83 t des Filterkuchens werden pro Stunde über einen Pastenbunker in einen Pastentrockner eingespeist. Der Pastentrockner wird mit Rauchgas über eine Brennkammer beheizt. Aus dem Schlauchfilter des Pastentrockners werden pro Stunde 1,25 t Trockenmaterial mit einem Feststoffgehalt von 95 Gew.-% (berechnet als Fe₃O₄) ausgeschleust und in einem separaten Kneter mit 1,25 t/h Filterkuchen mit einem Feststoffgehalt von 65 Gew.-% (berechnet als Fe₃O₄) vermischt. Aus dem Kneter laufen 2,5 t/h einer homogenen, krümeligen Masse mit einem Feststoffgehalt von 80 Gew.-% (berechnet als Fe₃O₄) in die Aufgabeschnecke des direkt beheizten Drehrohrofens. In dem Drehrohrofen wird das Material getrocknet und einer chemischen Umwandlung unterworfen (Fe₃O₄ → α-Fe₂O₃). Gegenüber der normalen Fahrweise mit einem Filterkuchen von 65 Gew.-% (berechnet als Fe₃O₄) konnte der Gesamt-Energieverbrauch (Summe des Energieverbrauchs aus Pastentrockner und Drehrohrofen) um 15 % gesenkt werden.

## Patentansprüche

1. Verfahren zur Kalzinierung von Filterkuchen in einem direkt beheizten Drehrohrofen, dadurch gekennzeichnet, daß vor Einspeisung in den direkt beheizten Drehrohrofen eine Teilmenge des Filterkuchens vorgetrocknet und anschließend mit der Restmenge des Filterkuchens wieder vereinigt wird.

2. Verfahren nach Anspruch 1, dadurch gekennzeichnet, daß als Filterkuchen anorganische Pigmente oder deren Vorprodukte eingesetzt werden.

3. Verfahren nach einem der Ansprüche 1 und 2, dadurch gekennzeichnet, daß als Filterkuchen Titandioxid-Hydrat eingesetzt wird.

4. Verfahren nach Anspruch 3, dadurch gekennzeichnet, daß das Titandioxid-Hydrat einen Feststoffgehalt von 37 bis 52 Gew.-% berechnet als TiO₂ aufweist.

5. Verfahren nach einem der Ansprüche 1 bis 4, dadurch gekennzeichnet, daß die Teilmenge des Filterkuchens in einem Pastentrockner mit gerührtem Fließbett vorgetrocknet wird.

6. Verfahren nach einem der Ansprüche 1 bis 5, dadurch gekennzeichnet, daß 5 bis 50 Gew.-% des Filterkuchens als Teilmenge vorgetrocknet werden.

7. Verfahren nach einem der Ansprüche 1 bis 6, dadurch gekennzeichnet, daß die vorgetrocknete Teilmenge und die Restmenge des Filterkuchens in einem Verhältnis gemischt werden, daß eine krümelige, nicht staubende, homogene Masse erhalten wird.

8. Verfahren nach Anspruch 7, dadurch gekennzeichnet, daß die krümelige, nicht staubende, homogene Masse einen Feststoffgehalt von 30 bis 85 Gew.-% aufweist.

9. Verfahren nach einem der Ansprüche 1 bis 8, dadurch gekennzeichnet, daß die vorgetrocknete Teilmenge mit der Restmenge des Filterkuchens vor der Einspeisung in den direkt beheizten Drehrohrofen in einem separaten Kneter bzw. Mischer oder direkt in der Ofenaufgabeschnecke vermischt wird.

## Claims

1. A process for the calcination of filter cakes in a directly heated rotary kiln, characterised in that part of the filter cake is pre-dried before introduction into the directly heated rotary kiln and is then recombined with the rest of the filter cake.

2. A process as claimed in claim 1, characterized in that inorganic pigments or their precursors are used as the filter cake.

3. A process as claimed in claim 1 or 2, characterized in that titanium dioxide hydrate is used as the filter cake.

4. A process as claimed in claim 3, characterized in that the titanium dioxide hydrate has a solids content of 37 to 52% by weight, expressed as TiO₂.

5. A process as claimed in any of claims 1 to 4, characterized in that part of the filter cake is pre-dried in a paste dryer with a stirred fluidized bed.

6. A process as claimed in any of claims 1 to 5, characterized in that 5 to 50% by weight of the filter cake is predried.

7. A process as claimed in any of claims 1 to 6, characterized in that the pre-dried part and the remainder of the filter cake are mixed in a ratio so that a friable, dust-free homogeneous mass is obtained.

8. A process as claimed in claim 7, characterized in that the friable, dust-free, homogeneous mass has a solids content of 30 to 85% by weight.

9. A process as claimed in any of claims 1 to 8, characterized in that the pre-dried part is mixed with the rest of the filter cake before introduction into the directly heated rotary kiln in a separate kneader or directly in the kiln feed screw.

## Revendications

1. Procédé de calcination de gâteaux de filtre dans un four tubulaire rotatif à chauffage direct, caractérisé en ce qu'une quantité partielle du gâteau de filtre est préséchée avant d'être chargée dans le four tubulaire rotatif à chauffage direct, puis mélangée à la quantité restante de gâteau de filtre.

2. Procédé suivant la revendication 1, caractérisé en ce qu'on utilise des pigments minéraux ou leurs précurseurs comme gâteau de filtre.

3. Procédé suivant l'une des revendications 1 et 2, caractérisé en ce qu'on utilise de l'hydrate de dioxyde de titane comme gâteau de filtre.

4. Procédé suivant la revendication 3, caractérisé en ce que l'hydrate de dioxyde de titane présente une teneur en matières solides de 37 à 52 % en poids calculée en tant que TiO₂.

5. Procédé suivant l'une des revendications 1 à 4, caractérisé en ce que la quantité partielle du gâteau de filtre est préséchée dans un sécheur à pâte à lit fluidisé agité.

6. Procédé suivant l'une des revendications 1 à 5, caractérisé en ce qu'on présèche 5 à 50 % en poids du gâteau de filtre comme quantité partielle.

7. Procédé suivant l'une des revendications 1 à 6, caractérisé en ce que la quantité partielle préséchée et la quantité restante du gâteau de filtre sont mélangées dans un rapport permettant d'obtenir une masse grumeleuse, non-poussiéreuse et homogène.

8. Procédé suivant la revendication 7, caractérisé en ce que la masse grumeleuse, non-poussiéreuse et homogène présente une teneur en matières solides de 30 à 85 % en poids.

9. Procédé suivant l'une des revendications 1 à 8, caractérisé en ce que la quantité partielle préséchée est mélangée à la quantité restante du gâteau de filtre avant d'être chargée dans le four tubulaire rotatif à chauffage direct, dans un malaxeur ou un mélangeur séparé, ou encore directement dans la vis de chargement du four.
